# EUROPEAN PATENT APPLICATION

(11) **EP 1 930 399 A1**
(43) Date of publication of application: **11.06.2008**
(21) Application number: 07254664.1
(22) Date of filing: 30.11.2007
(51) Int. Cl.: C10M 125/08, C10M 125/20, H01F 1/44, C10N 40/02, C10N 30/06

(54) **Magnetized intermetallic compound and a lubricating oil containing said compound**

(30) Priority: 30.11.2006 BR PI0605014
(71) Applicant: Petroleo Brasileiro S.A. Petrobras, Rio de Janeiro RJ (BR)
(72) Inventor: de Oliveria, Adelci Menezes, Cafuba, Piratininga Niteroi, RJ CEP 24.350-300 (BR)
(74) Representative: Benson, John Everett

(57) **Abstract**

This invention refers to a magnetized intermetallic compound which may be applied as a basic lubricating oil in order to create a high performance finished lubricating oil. Magnetizing the intermetallic compound will confer to the finished lubricating oil when applied to a solid body, the ability of forming a magnetic film on the external surface of a solid body, and in so doing will confer to the additive a greater capacity to reduce friction, thus minimizing the effects of wear caused by contact between the surfaces of bodies of several dynamic systems.

## Description

### CROSS REFERENCE TO RELATED APPLICATION

This application is based upon and incorporates by reference, the contents of Brazilian Patent Application No. PI 0605014-0 filed November 30, 2006.

### FIELD OF THE INVENTION

This invention refers to a magnetized intermetallic compound which may be applied to basic lubricating oil in order to create a high performance finished lubricating oil. More specifically the finished lubricating oil of this invention reduces friction and minimizes the effect of wear caused by contact between the metal surfaces of various dynamic systems.

### BACKGROUND OF THE INVENTION

The atoms and molecules that make up the body of a dynamic system are constituted of positive charges and negative charges. Depending on the arrangement of said charges, they cancel each other out forming atoms or neutral molecules.

However, in some situations, the nucleus of negative charge may not match the nucleus of positive charge, so that said charges do not cancel each other out. Due to the fact that these charges do not cancel each other out, when bodies of dynamic systems come close to each other, their atoms and molecules interact electrically. This interaction becomes more likely as the distance between the bodies is reduced.

However, up to now, the details of this electrical interaction are not very well understood. Therefore, it is not yet known how the internal distribution of charges in a body takes place, once said charge distribution is not static when the bodies in contact are in movement. The contact surface of the bodies directly influences the interaction between the charges. The larger the contact surface between the bodies is, the greater the probability that the bodies will interact in a more intense form.

When two or more bodies interact and touch each other, there is a resistant force that opposes to the movement, in order to reduce the amount and speed of the movement. Said force, known as friction, is not only related to the attraction of the electrical charge of the molecules and atoms of the material of the friction surface of the bodies of a system. There are several other factors that influence the force of friction, among which are the interface material, the contact time, the relative speed between the surfaces, and the temperature and humidity of the environment.

Currently, all industrial sectors suffer direct or indirect consequences due to the action of the force of friction. Static or dynamic systems suffer from the effects of the force of friction, which causes great losses in the industrial sector. Therefore, it is necessary to develop ways to control the action of the force of friction, in order to minimize the effect of wear on equipments that make up said systems and to reduce the consumption of energy.

Material wear occurs when two or more surfaces are in contact and a plastic deformation is caused in rough areas. Said deformation occurs, because in this moment the body is under the action of two forces: one force with or without an applied charge on the surfaces of the bodies due to adhesion and another force due to the attraction between the materials.

Studying the ability of controlling friction and reducing wear of a material was begun around the XV century and since then new techniques to control friction and to reduce wear on materials have been developed. The need of industry to increase efficiency in the moving parts of a machine or equipment has spurred an increase in improvement. The efficiency in reduction of wear in industry minimizes the negative effects on production caused by losses due to downtime.

The use of lubricating oils in machines and equipment is an effective solution to reduce friction between surfaces that come into contact. In this way, the technologies related to lubricating oils have been constantly improving. In an attempt to provide the market with high performance finished lubricating oils, several types of additives have been developed.

Thus, the producing of a lubricating additive is described in the American Patent number US2006160709, which includes a succinimide compound or a product obtained by a boron reaction. Said compounds are used profitably in the preparation of a lubricating composition that maintains an anti-vibratory property for a long time without reducing the ability to transmit torque or the friction coefficient between metals.

Another technology related to the development of additives for lubricants is described in document WO 2006006519. Said document describes a lubricant additive that contains an oil soluble polymer with at least one component selected from the group consisting of between 6 and 15 metals from the fourth and seventh group of the periodic table. The additive described in document WO 2006006519 is commendable because of its good oil solubility and its applicability to use in automobiles in an attempt to reduce the fuel expense. Oil lubricant compositions and grease compositions containing the described additive reduce the effect of friction and therefore are effective against it.

However, finished lubricating oils as well as additives added to basic lubricating oil for a better performance of lubricating oil, are widely discussed subjects in the literature, this invention is to provide the same thing, a new additive that possesses efficient physicochemical properties, in such a way that when said additive is added to a lubricating substance, it allows high performance with an efficient reduction in friction and wear on the metal surfaces of dynamic systems.

### SUMMARY OF THE INVENTION

This invention refers to a magnetized intermetallic compound which may be applied as an additive in basic lubricating oil in order to create a high performance finished lubricating oil. More specifically, said intermetallic composition is a nanometric compound formed by iron nitride and iron carbon-nitride, into which its particles are pulverized. Initially said intermetallic compound is polymerized to increase the efficiency of the magnetization. Polymerization of the powdered inter-metallic compound is performed using a mixture of polymers in a proper concentration. Once a change has been effected in the physical state of the intermetallic compound and said compound becomes a solid, said solid is submitted to capacitor discharge magnetizer equipment or an inductor coil so that it becomes magnetized. From the magnetization of the intermetallic composition, various finished lubricating oil formulations will be produced. Magnetizing the intermetallic compound of said formulations will cause the finished lubricating oil to form a magnetic film on the external surface of a solid body when applied to it, and in so doing it will confer to the additive a greater capacity to reduce friction, thus minimizing the effect of wear caused by contact between the surfaces of the bodies of several dynamic systems.

### BRIEF DESCRIPTION OF THE DRAWINGS

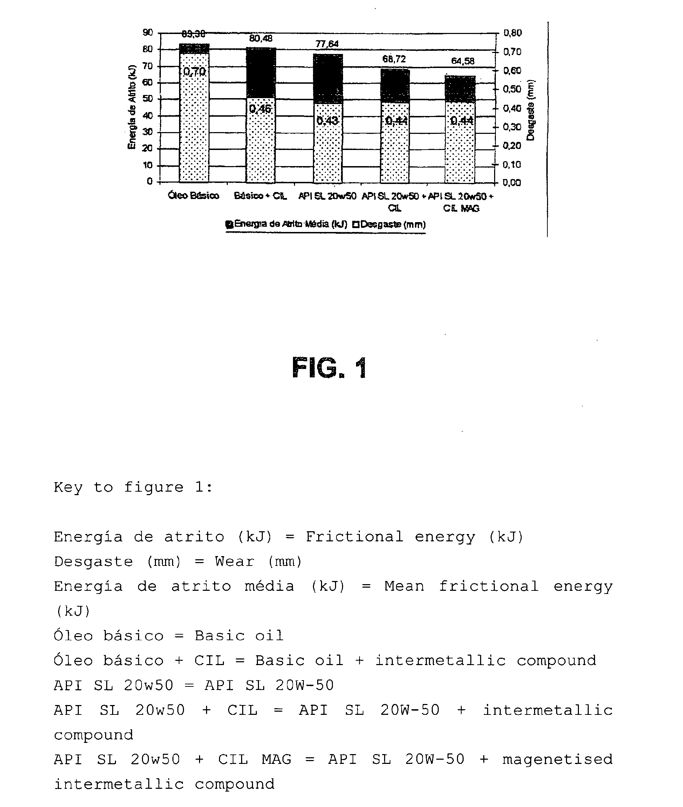

Figure 1 shows the result of the tribological wear test for the lubricating oils tested.

### DETAILED DESCRIPTION OF THE INVENTION

This invention refers to a magnetized intermetallic compound, which is added to a basic lubricating oil as an additive. Said additive elevates the performance of a finished lubricating oil due to its elevated capacity to reduce friction between two or more surfaces in contact, so that in this way it minimizes the effects of wear in machinery and/or equipment of various types currently used in dynamic systems.

The use of the finished lubricating oil containing the magnetized intermetallic compound as additive of this invention, in addition to reducing friction and prolonging the useful lifetime of machinery and equipment, it is effective in cooling some parts of dynamic systems, preserves the internal seals of said systems, protects the machinery and/or equipment from rusting and corrosion, facilitates the elimination of undesirable particles, avoids the formation of scum, and still, reduces losses by lowering downtime for said machines and/or equipment. The particles of said compound have an extremely active surface and are stable at high temperatures.

When the finished lubricating oil containing the magnetized intermetallic compound as additive of this invention is applied to a surface, it forms a magnetic film over the external surface of solids. Said magnetic film, grants to lubricating oil a high performance.

In this implementation, the intermetallic compound used was a compound of nanometric dimensions, formed by iron nitride and iron carbon-nitride, obtained through a high temperature iron oxide reduction reaction, in the presence of a gas reducer, followed by a nitridation/nitrocarbonization reaction.

The intermetallic compound formed by iron nitrides and iron carbon-nitrides, from the ∈ phase, is intrinsically friction reducer. When nitrides and carbon-nitrides are magnetized and stabilized in a lubricating liquid medium, upon passing to the surfaces under friction, locally is formed an energetically excited region which attracts the nano-magnets present in the lubricant. Thus, the forming of a continuous film is favored on the contact surface. Said film induces the reduction of friction and the increasing of the useful life of the bodies in contact.

In order to the magnetization of the intermetallic compound be effective, said compound should be in the form of a solid mass. In the solid form, the particles are more aggregated and the magnetism behaves in a more uniform and effective way.

In this way, initially, the powdered particles of an intermetallic compound were submitted to previous polymerization process. The process of polymerization consists of an endothermic reaction, between a polymer mixture and basic lubricating oil, into which is added said intermetallic compound.

The polymer mixture preferably used in this implementation was a mixture of ethylene vinyl acetate (EVA) with styrene-butadiene rubber (SBR) and the basic lubricating oil was selected among synthetic or mineral oils with any viscosity level.

The powdered particles of the intermetallic compound formed by iron nitride and iron carbon-nitride molecules were only added to the reactional system after partial fusion of the polymer mixture.

After the addition of said intermetallic compound, an endothermic reaction was followed, which was developed up to the completely fusion of the polymer mixture. After total fusion, the viscous suspension was poured into a solid mold preferably made of steel so that cooling may occur and consequently followed by the solidification of the intermetallic compound formed by iron nitride and iron carbon-nitride molecules.

Once the solid mass of said intermetallic compound was formed, said solid mass was submitted to electromagnetic energy emission equipment, such as for example, a capacitor discharge magnetizer, to magnetize said intermetallic compound.

A magnetic discharge of approximately 22,000 J was applied to the polymerized intermetallic compound. The magnetic saturation of said compound was guaranteed in around 1 second.

When the magnetic discharge on the intermetallic compound formed by iron nitride and iron carbon-nitride molecules is finished, an intermetallic compound with magnetic properties is obtained.

In order to obtain finished lubricating oil formulations with the additive made of the intermetallic compound formed by iron nitride and iron carbon-nitride magnetized molecules as described in this invention, solid masses of said compound were submitted to a new endothermic reaction, which creates a fusion of said solid masses. The endothermic reaction allows the intermetallic compound to return to the suspension phase and to be later added to the lubricating oil formulations.

The obtainment of finished lubricating oil, that contains the magnetized intermetallic compound, object of this invention, includes adding said magnetized intermetallic compound in the form of a suspension to a mixture made of a dispersant solution, such as for example, solutions of sulfonated, phenated or dispersants of succinimide with lubricating oil.

When the magnetized intermetallic compound is added to said mixture, the reactional system is submitted to homogenization through a mechanical stirring process, in order to the particles of the magnetized intermetallic compound remain dispersed in suspension and be "encapsulated" by the dispersants present. Stirring the reactional system occurs within a preferential range of rotation of between 5,000 and 25,000 rpm, for a period preferably within a range of between 5 and 30 minutes. Through this process, several formulations of finished lubricating oils are obtained.

After obtaining several formulations of finished lubricating oil, adding the magnetized intermetallic compound of this invention, these formulations are previously analyzed concerning to friction energy. According to the results previously obtained by analysis, one of said formulations is selected to perform the tribological test to evaluate the effect of adding the new additive to basic lubricating oil.

The tribological test consists of submitting the formulation selected to wear conditions using an appropriate technique, such as for example, the technique of sliding. However, in order to obtain a comparative result from the tribological test, besides the formulation of the lubricating oil added with a magnetized intermetallic compound, samples of several other types of lubricating oil were also be submitted to the same test conditions, as well as the suspension of the intermetallic compound magnetized in isolating.

The samples submitted to the tribological test conditions were: The suspension of the intermetallic compound magnetized in isolating, basic oil, a finished lubricating oil formulation obtained by the procedures described in this invention, commercial finished lubricating oil and a mixture of a commercial lubricating oil with the magnetized metallic compound obtained using this invention.

Samples of each one of the analyzed substances were applied to the proper equipment, such as for example, equipment with four ball bearings, which operates under the specific conditions developed during a load cycle.

Said equipment includes four ball bearings in contact under a rotational movement of a shaft motor at a stirring speed ranging from 150 to 1,500 rpm, in accordance with the stages developed during the load cycle.

The load cycle applied on the samples during the tribological test consists of three stages. Said stages combined with the rotational movement of a shaft motor, caused a wearing to the ball bearings that were in contact. The analysis of wearing on the ball bearings allows that the samples applied on said ball bearings be verified relating to their performance and efficiency when the said ball bearings are submitted to different types of lubricant samples.

During the development of the load cycle, the temperature in which the stages of said cycle develop must be controlled. Said temperature control occurs so that the viscosity of the various formulations of lubricating oil applied on the ball bearings do not suffer alterations and mask the performance of each sample used during the testing. Temperature control maintains the temperature during the operation of the load cycle at approximately 90°C. The period of each load cycle developed in the tribological test is approximately 60 minutes.

The equipment used to perform the tribological test was provided by a system that monitors friction torque and quantifies the relative friction energy. Said monitoring and quantifying was carried out by analyzing spreadsheets created on an appropriate computer program, such as for example, Excel. Said spreadsheets are created using electronic files generated by the system that acquires data from the equipment containing the four ball bearings.

At the end of the last load cycle stage, the wear suffered by the lower ball bearings is evaluated. The evaluation of the ball bearings consists of obtaining an average for the values measured obtained through the wear on the three ball bearings. Said average is the final result of the tribological test on the different types of samples analyzed.

So that the invention may be better understood, detailed examples follow describing the invention. Indeed, the examples here given are purely illustrative and, in no way, limit the invention.

### Example 1: Polymerization of the intermetallic iron nitride and iron carbon-nitride compound.

Pulverized particles of an intermetallic iron nitride and iron carbon-nitride compound were selected and submitted to a polymerization process, in such a way that when said compound was submitted to electromagnetic radiation, the magnetizing of such compound would be in a uniform and more effective way.

Polymerization process consists of an endothermic reaction between a polymeric mixture of ethylene vinyl acetate (EVA) and styrene-butadiene rubber (SBR) and a basic lubricating oil, which was selected from among synthetic or mineral oils with any level of viscosity. The endothermic reaction was processed until a partial fusion of the polymers was obtained. Partial fusion of the polymer mixture occurs at a temperature of approximately 200°C.

After the partial fusion of the polymers, the intermetallic iron nitride and iron carbon-nitride was added to the reactional medium. Once said compound is added, the reaction was processed until a complete fusion occurred in the polymeric mixture and the nanoparticles became homogeneously distributed.

For the endothermic reaction developed in the polymerization process, the intermetallic iron nitride and iron carbon-nitride compound was added to the reactional medium at a proportion of about 70%. The mixture of polymers was added to the reactional medium in a proportion of 5% and the basic oil was added to the reactional medium in a proportion of 25%.

After the total fusion of the polymer mixture and obtainment of a viscous suspension, said suspension was poured into a solid mold capable of supporting high temperatures, so that the cooling of suspension be occur and obtain, as final product of the polymerization reaction, solid masses of the intermetallic iron nitride and iron carbon-nitride compound. Preferably the solid mold used in this invention has a steel core and the cooling occurred in a natural process reaching room temperature.

Once the solid mass of the intermetallic iron nitride and iron carbon-nitride compound is obtained, said mass was trimmed mechanically, for example, with commonly used needles, to allow it to be submitted to a Capacitor Discharge Magnetizer, with which it was submitted to a single magnetic discharge of about 22,000 J.

### Example 2: Obtainment of finished lubricating oil containing the intermetallic iron nitride and iron carbon-nitride compound produced according to this invention.

In order to the magnetized intermetallic compound could be added to a basic lubricating oil, said compound was submitted to a new endothermic reaction so that fusion of said compound might take place, in order to said compound might return to the form of a suspension and later be added to the basic lubricating oil.

To obtain finished lubricating oil containing the magnetized intermetallic compound as additive obtained as described in Example 1, an endothermic reaction was carried out between a mixture of ethylene vinyl acetate (EVA) and a basic oil. Said endothermic reaction was processed until a partial fusion of the EVA was obtained. The partial fusion of the EVA occurs at a temperature within a range of approximately 150-200 °C.

After the partial fusion of the EVA, the intermetallic iron nitride and iron carbon-nitride compound was added to the reactional medium and the reaction continued to be processed until fusion of the EVA occurred as well as the complete fusion of the magnetized intermetallic iron nitride and iron carbon-nitride compound.

Said compound rapidly melts, once the fusion of the magnetized intermetallic iron nitride and iron carbon-nitride compound occurs at a range of 70 and 100 °C and the reactional medium was already at a temperature of approximately 150 and 250 °C due to the partial fusion of the EVA. This fact guarantees total incorporation of said compound to the medium, so that the particles of said compound remain in suspension.

After total fusion of the magnetized intermetallic iron nitride and iron carbon-nitride compound and after obtaining a homogeneous suspension, the reaction was interrupted and said suspension was added to a basic lubricating oil. The concentration of the intermetallic compound in the various formulations obtained, ranges from zero to 0.5%.

After adding the magnetized intermetallic iron nitride and iron carbon-nitride compound to the mixture of EVA and oil, said mixture was submitted to homogenization in a Turrax type mixer, at a rotation rate of 15,000 rpm, for a period of 20 minutes. During mixing, the particles are in constant movement. This movement allows the particles to be scattered and better distributed in solution and be "encapsulated" by the dispersant present.

When the homogenization of the mixtures ends, several formulations of finished lubricating oil are obtained. Said formulations was previously analyzed as per the friction energy , and according to the previous results, some of said formulations were selected to perform the tribological test to evaluate the effect of adding the new additive produced to be used in a basic lubricating oil.

Among these various formulations, the formulation that comprised the intermetallic compound with a 0.1 % concentration by weight was the one that showed the best result for loss of friction power and therefore, was selected to be used in the tribological test.

### Example 3: Tribological test of the finished lubricating oil

The tribological test consists of a comparative analysis of several types of lubricating oil. It was comparatively analyzed the intermetallic iron nitride and iron carbon-nitride compound magnetized in isolation, a basic oil, the finished lubricating oil obtained following the procedure described in Example 2, a commercial finished oil and a mixture of a commercial finished oil added to an intermetallic compound obtained by the procedure described in Example 1.

The mixture of the commercial finished oil and the intermetallic compound now developed was obtained in a similar way to that used to obtain the mixture of the basic oil and the intermetallic compound. The dispersant substances and the intermetallic compound were added to the commercial finished oil and then were homogenized in a similar manner as was the mixture of the basic oil and said compound.

The different types of lubricating oils were submitted to wear conditions using a proper technique, such as for example, the technique of sliding. The tribological test was performed in duplicate for all the lubricating oils analyzed.

The different types of oils were applied separately to equipment containing four ball bearings, which perform a rotating movement within a range of 150 and 15,000 rpm, in accordance with the phases that develop during a load cycle. The lubricating oils analyzed were submitted to a single load cycle.

The load cycle used during the tribological test consists of three stages, which combined with the rotating movement of the drive shaft provides wear on the ball bearings and, consequently, allows the performance of a lubricating oil to be evaluated, according to the type of sample applied. The length of the load cycle used with the lubricating oils analyzed is approximately 60 minutes and the temperature of the oil bath is controlled to remain around 90°C.

The first cycle stage occurs during a period of approximately 30 minutes. The first stage of the load cycle operates under a hydrodynamic lubrication system and with a rotation of preferably 1,500 rpm with a rotational force of around 98N.

The second cycle stage occurs during a period of approximately 15 minutes. The second load cycle operates under a mixed lubrication system, in other words, a lubricating film does not allow contact between the metal surfaces or allow sporadically contact between metal surfaces. The second stage of the load cycle operates under a rotational movement of preferably 150 rpm with a rotational force of around 1471 N.

The conditions of the third phase of the load cycle are similar to the conditions of the first stage, however the difference between the two stages is related to the rotational force applied. In the third stage of the load cycle, the rotational force applied is 147N and the duration of this cycle is approximately 15 minutes.

During each load cycle run, electronic files were generated by the data acquisition system on the equipment, in order to allow monitoring of the level of friction torque, and to quantify the friction energy relative to the PROCESS TO OBTAIN AN INTERMETALLIC COMPOUND AND ITS USE IN LUBRICATING OILS to which the ball bearings were submitted. Said monitoring and quantifying was carried out through a spreadsheet created on a computer program, such as for example, Excel.

At the end of the load cycle, the lower ball bearings (which were worn as a consequence of contact with the upper ball bearing) were evaluated.

The evaluation of the ball bearings was effected by the presence of wear marks on the external surface of the ball bearings. Said marks are called wear scars. The wear scars on each ball bearing were measured using an optical microscope and the average of these measurements on the three ball bearings was the final result of the tribological test on the lubricating oils. The results obtained during the test are shown in Figure 1.

The invention here described is not limited to this implementation and those skilled in the technique will understand that any specific characteristic here introduced must only be understood as a description to facilitate understanding and cannot be carried out without deviating from the concept of the invention described. The limiting characteristics of the object of this invention are related to the Claims which make up a part of this report.

## Claims

1. Magnetic intermetallic compound comprising nanometric pulverized particles of magnetized iron nitride and iron carbon-nitride, to be added to a basic lubricating oil to provide efficient performance in reduction of friction between metal surfaces and reduction in wear in various types of machinery or equipment, in order to prolong the useful life of these.

2. Magnetic intermetallic compound according to claim 1, wherein the particles of the additive present an extremely active surface, are stable at high temperatures and form a fine sticky film when applied to a metal surface.

3. Magnetic intermetallic compound according to claim 1 or 2, wherein nanometric particles of the intermetallic compound are initially polymerized and then submitted to a process of magnetization.

4. Magnetic intermetallic compound according to any one of the preceding claims, wherein a solid mass of polymerized particles is submitted to electromagnetic energy emission equipment, preferably to a capacitor discharge magnetizer, which emits magnetic radiation, preferably of 22, 000J.

5. Magnetic intermetallic compound according to any one of the preceding claims, wherein said compound is submitted to an endothermic reaction to obtain a suspension, which will later be added to a lubricating oil.

6. Finished lubricating oil comprising a magnetized intermetallic compound made up of nanometric particles of magnetized iron nitride and iron carbon-nitride according to any one of claims 1 to 5.

7. Use of a magnetic intermetallic compound according to any one of claims 1 to 5 as an oil additive.
